# NEUE EUROPÄISCHE PATENTSCHRIFT

(11) **EP 0 387 931 B2**
(45) Veröffentlichungstag und Bekanntmachung des Hinweises auf die Entscheidung über den Einspruch: **05.06.2002**
(45) Hinweis auf die Patenterteilung: 23.06.1993
(21) Anmeldenummer: 90200413.4
(22) Anmeldetag: 22.02.1990
(51) Int. Cl.: F16J 1/16, F02F 3/02

(54) **Leichtmetallkolben für Verbrennungsgsmotoren**
Light metal piston for internal-combustion engines
Piston en alliage léger pour moteur à combustion

(30) Priorität: 17.03.1989 DE 3908810
(43) Veröffentlichungstag der Anmeldung: 19.09.1990
(73) Patentinhaber: KS Kolbenschmidt GmbH, 74172 Neckarsulm (DE)
(72) Erfinder: Mielke, Siegfried, Dr., D-7107 Neckarsulm (DE); Weber, Wilfried, Dr., D-2000 Hamburg 13 (DE); Steidle, Werner, D-7107 Bad Friedrichshall (DE)
(74) Vertreter: Dreiss, Fuhlendorf, Steimle & Becker

(56) Entgegenhaltungen:
- DE-A- 2 507 899
- DE-A- 2 607 624
- DE-A- 3 733 910
- DE-C- 689 073
- DE-C- 761 065
- JP-U- 597 245

## Beschreibung

Die Erfindung betrifft einen Leichtmetalldieselkolben mit den Merkmalen des Oberbegriffs des Anspruchs 1. Ein derartiger Kolben ist beispielsweise bekannt aus DE-C-25 07 899.

Unter den mechanischen Belastungen durch den Zünddruck wird der Boden von Leichtmetallkolben für Verbrennungsmotoren im Betrieb derart verformt, daß sich dieser über den Bolzennaben belastungsbedingt wie ein Balken mit kleiner Abstützbreite im Bereich der Balkenmitte nach oben verwölbt, wobei ebenso eine Verwölbung der Ringnuten erfolgt. Durch eine verformungssteife Gestaltung des Leichtmetallkolbens läßt sich dessen Deformation zwar in beherrschbaren Grenzen halten. Zur kraftflussgerechten Abstützung des Kolbenbodens existieren verschiedene Bolzennabenformen, die unter bestimmten Randbedingungen jeweils gewichtsoptimale Lösungen darstellen. Für eine hohe Zünddruckbelastung wird vorzugsweise die Blockabstützung der Bolzennaben vorgesehen, bei der die auf der Innenseite geraden Bolzennaben ohne Hinterschneidung in den Kolbenboden übergehen. Die Trapezabstützung ist eine für sehr hoch belastete, vorzugsweise Dieselkolben, eingesetzte Variante der Blockabstützung, bei der die Bolzennaben auf der Innenseite unter einem Neigungswinkel von 8 bis 15° angeschrägt sind und ein entsprechend abgeschrägtes Pleuel eingesetzt wird. Durch teilweise Überdeckung der Lagerflächen setzt die Trapezabstützung die Biegebeanspruchung des Kolbenbodens und des Kolbenbolzens herab und erlaubt somit eine bis zu 15 % höhere Belastbarkeit. Selbst bei einer auf hohe Belastung ausgelegten Abstützung der Bolzennaben, d.h. der Zone zwischen dem oberen Scheitel der Bohrungen in den Bolzennaben und dem Kolbenboden, führt ein maximaler Zünddruck von 150 bis 170 bar zu einer Belastung an den unter Zünddruck maximal belasteten Stellen des Randes der Brennraummulde in Bolzenachsrichtung, die über der Grenze der Belastung von etwa 30 N/mm² für einen gegossenen Leichtmetallkolben mit konventioneller Konstruktion der Bolzennaben liegt. Darüber hinaus führt eine konische Aufweitung des pleuelseitigen Teils der Bohrungen in den Bolzennaben oder ein Einzug am Kolben in der vertikalen Ebene der pleuelseitigen Enden der Bolzennaben oder die Anordnung seitlicher Aussparungen, sogenannter Öltaschen, in den Lagerflächen der Bohrungen der Bolzennaben zu einem Spannungsanstieg an den unter Zünddruck maximalen Belastungen ausgesetzten Stellen des Randes der Brennraummulde.

Aus der DE-C-761 065 ist ein Leichtmetallkolben für Brennkraftmaschinen bekannt, bei dem nach außen offene Ausnehmungen zwischen den Bolzennaben und dem Kolbenkopf in den Stützblöcken angeordnet sind. Solche Ausnehmungen bewirken eine Umlenkung des Kraftlinienflusses in die Breite, d.h. in die Bereiche links und rechts der Ausnehmungen.

Es ist die Aufgabe der vorliegenden Erfindung, die Spannungen am Rand der Brennraummulde möglichst niedrig zu halten und einen Spannungsausgleich im Bereich der Ringnuten zu erreichen, ohne den Werkstoff zu verändern. Diese Aufgabe wird durch einen Kolben mit den Merkmalen des Anspruchs 1 gelöst.

Nach einer Ausführungsform der Erfindung besitzt das Sackloch einen schlitzförmigen Querschnitt, dessen größte Abmessung parallel zu der die Bolzenachsrichtung einschließenden Horizontalebene verläuft und eine Länge von 30 bis 150 %, vorzugsweise 50 bis 120 %, des Durchmessers der Bohrungen in den Bolzennaben aufweist und dessen kleinste Abmessung bis zu 3 mal so groß wie die Höhe der untersten Ringnut ist.

Eine besonders günstige Spannungsverteilung ergibt sich, wenn das Langloch im Querschnitt aus zwei gleichschenkligen, kolbenschaftseitig einen stumpfen Winkel bildenden Abschnitten besteht, die jeweils einen Winkel von 5 bis 25° mit der die Bolzenachsrichtung einschließenden Horizontalebene bilden.

Je nach Größe der mechanischen Beanspruchung des Brennraummuldenrandes aus dem Zünddruck erstrecken sich die Sacklöcher vom Mantel des Kolbenschafts bis in den Bereich zwischen Anfang und Ende des mittleren Drittels der Auflagelänge des Kolbenbolzens in den Bolzennaben.

In aller Regel sind die Sacklöcher symmetrisch zu der die Kolbenachse und die Bolzenachsrichtung einschließenden Ebene und senkrecht zu der die Kolbenachse und die Richtung senkrecht zur Bolzenachsrichtung einschließenden Ebene angebracht.

Im Hinblick auf die Erzielung optimaler Schmierverhältnisse zwischen dem Kolbenbolzen und den Lagerflächen der Bohrungen in den Bolzennaben sind das bzw. die Sacklöcher in den dem oberen Scheitel der Bohrungen in den Bolzennaben gegenüberliegenden Abschnitten über einen Durchbruch mit den Bohrungen in den Bolzennaben verbunden.

Die Erfindung ist in den Zeichnungen beispielhaft dargestellt und wird nachfolgend erläutert.

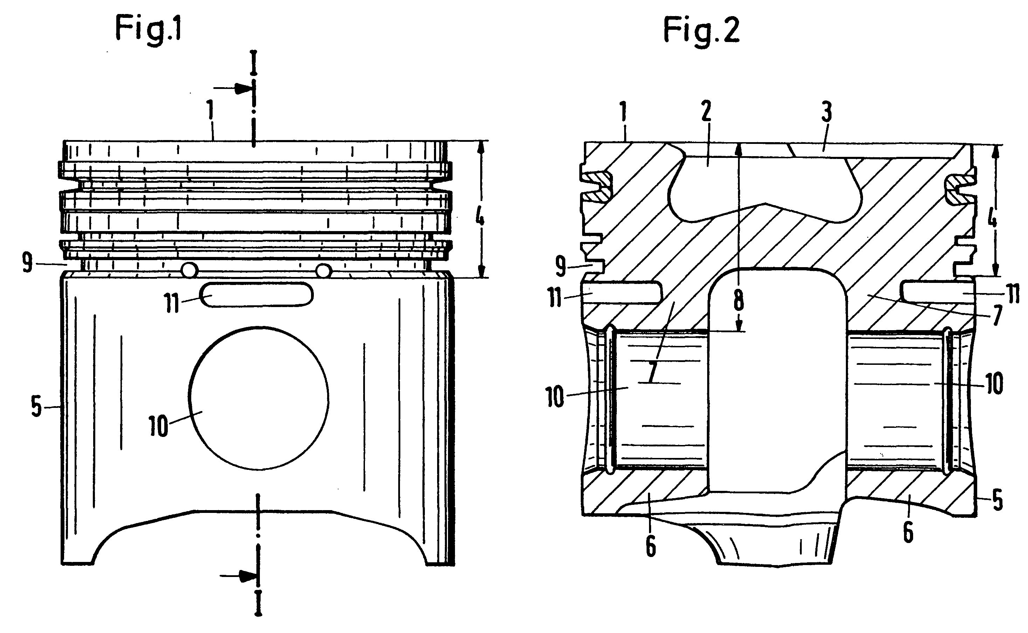

Der aus einer Aluminiumkolbenlegierung des Typs AlSi12CuNiMg gegossene Kolben, von dem Fig. 1 eine Seitenansicht in Bolzenachsrichtung und Fig. 2 einen Längsschnitt entlang der Schnittlinie I-I der Fig. 1 zeigen, besteht aus einem den Kolbenboden (1) mit der Brennraummulde (2) und mit der Ventiltasche (3) sowie der Ringnutenpartie (4) bildenden Kolbenkopf und einem Kolbenschaft (5) mit integrierten Bolzennaben (6) mit Blockabstützung (7) mit einer Dehnlänge (8) von 50 % des Kolbendurchmessers. Im Bereich zwischen der untersten Ringnut (9) und dem oberen Scheitel der Bohrungen (10) in den Bolzennaben (6) ist ein radial sich vom Mantel des Kolbenschafts (5) nach innen erstreckendes im Querschnitt langlochartiges Sackloch (11) vorgesehen, das sich bis etwa zur Mitte der Auflagelänge des Kolbenbolzens in den Bolzennaben (6) symmetrisch zu der die Kolbenachse und die Bolzenachsrichtung einschließenden Ebene und senkrecht zu der die Kolbenachse und die Richtung senkrecht zur Bolzenachsrichtung einschließenden Ebene erstreckt.

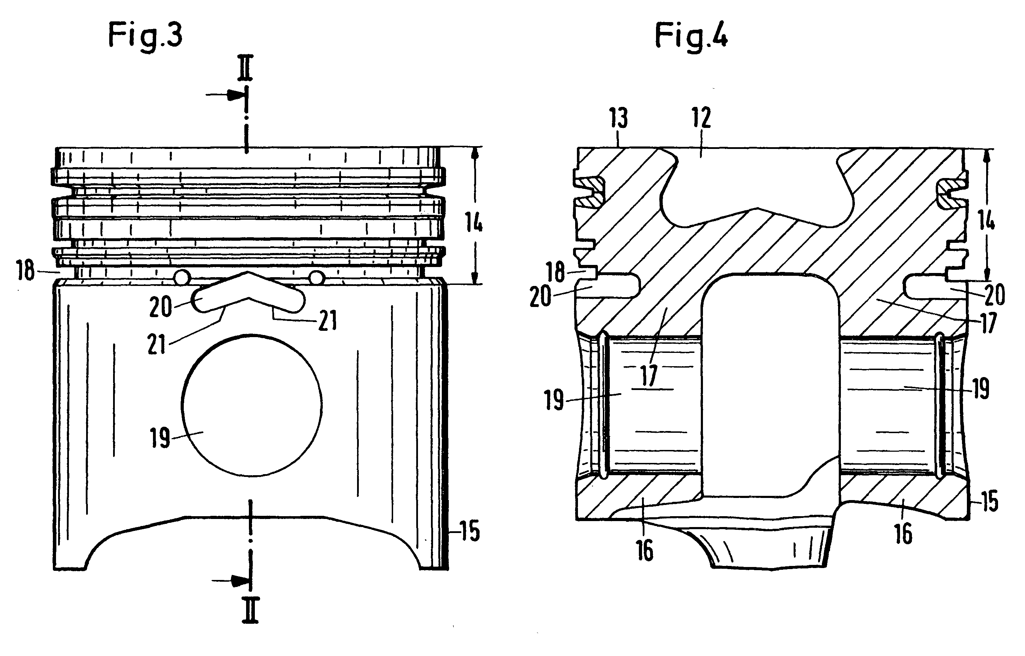

In den Fig. 3 und 4 ist als Seitenansicht in Bolzenachsrichtung bzw. als Längsschnitt entlang der Schnittlinie II-II ein aus einer Aluminiumkolbenlegierung gegossener Kolben mit Brennraummulde (12) im Kolbenboden (13) dargestellt. Der Kolbenkopf umfaßt die Ringnutenpartie (14) und der Kolbenschaft (15) ist mit integrierten Bolzennaben (16) mit Blockabstützung (17) versehen. Zwischen der oberen Flanke der untersten Ringnut (18) und dem oberen Scheitel der Bohrungen (19) in den Bolzennaben befindet sich ein radial nach innen verlaufendes, vom Mantel des Kolbenschafts (15) her angebrachtes Sackloch (20), dessen Querschnitt die Form eines aus zwei kolbenschaftseitig einen stumpfen Winkel einschließenden Abschnitten (21) gebildeten Langlochs besitzt, wobei der größte Durchmesser der symmetrisch zu der die Kolbenachse und die Bolzenachsrichtung umfassenden Ebene liegenden Abschnitte einen Winkel von 17° mit der senkrecht auf dieser Ebene stehenden Hodzontalebene bildet.

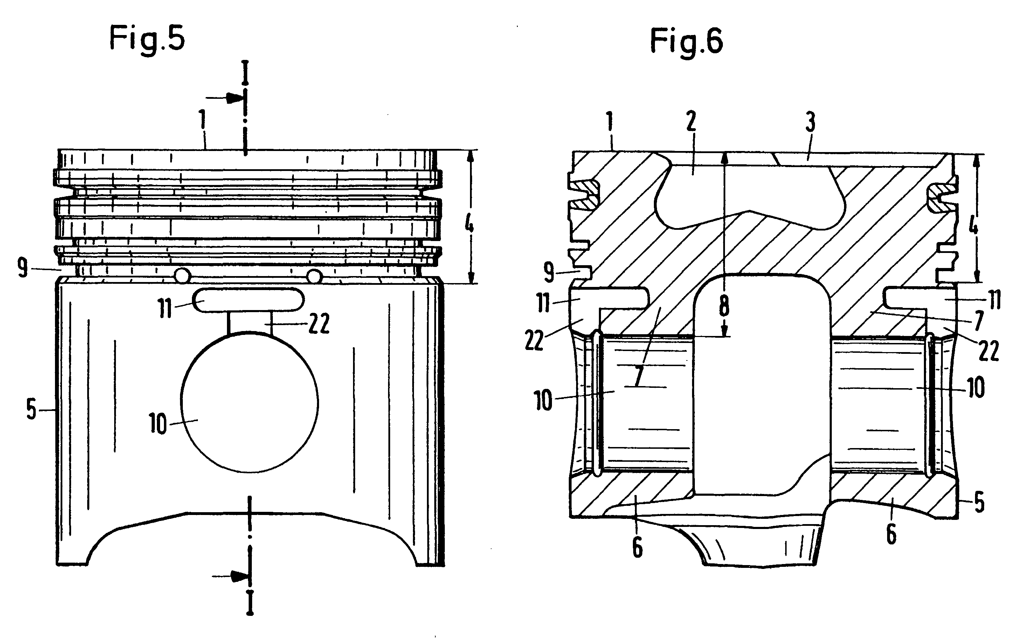

Die Fig. 5 und 6 zeigen einen Kolben gemäß Fig. 1 und 2, bei dem im Unterschied zu Fig. 1 und 2 das Sackloch (11) in seinem vorderen Abschnitt über einen in den oberen Scheitel der Bohrungen (10) in den Bolzennaben (6) mündenden Durchbruch (22) mit den Bohrungen (10) verbunden ist.

In der nachfolgenden Tabelle sind die Ergebnisse von Spannungsmessungen an der Innenseite der Blockabstützung, am Brennraummuldenrand im Bereich der Ventiltasche parallel zur Bolzenachsrichtung und am Brennraummuldenrand außerhalb der Ventiltasche parallel und senkrecht zur Bolzenachsrichtung an einem erfindungsgemäßen Leichtmetallkolben (II) und an einem herkömmlichen Leichtmetallkolben (I) durchgeführt. An den gleichen Meßstellen erfolgten ergänzend Spannungsmessungen an einem erfindungsgemäß gestalteten Leichtmetallkolben (III), bei dem der Rand der Brennraummulde mit einem aus Al₂O₃-Fasern bestehenden Körper verstärkt war. Die vergleichende Gegenüberstellung der Meßergebnisse zeigt eindeutig, daß bei dem erfindungsgemäß gestalteten Leichtmetallkolben die durch den Zünddruck verursachten Spannungen, verglichen mit einem herkömmlich aufgebauten Leichtmetallkolben, deutlich gesenkt werden können.

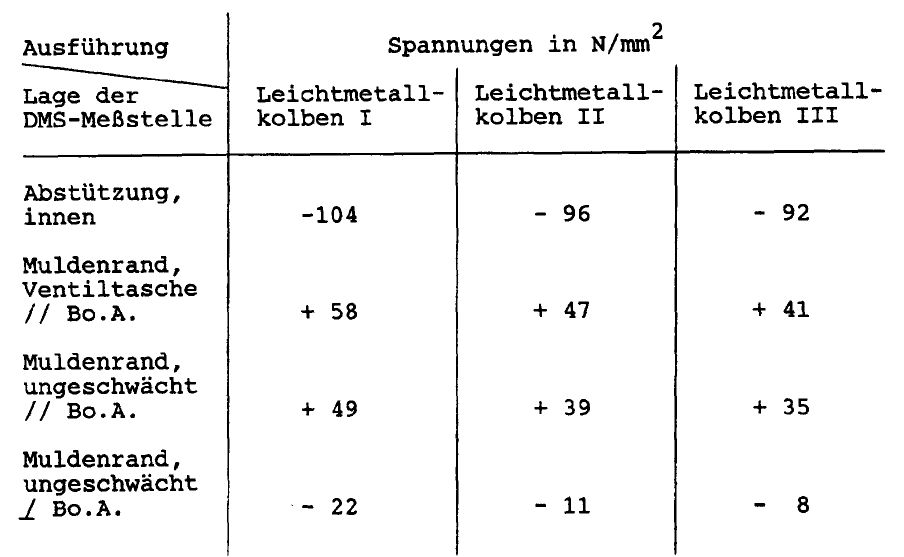

Über die durch die Anwendung der erfindungsgemäßen Maßnahmen erzielte Absenkung der durch den Zünddruck verursachten Spannungen hinaus wird in vorteilhafter Weise durch das Anbringen der Sacklöcher zusätzlich eine Gewichtsersparnis erzielt.

## Patentansprüche

1. Leichtmetalldieselkolben für Verbrennungsmotoren, der aus einem den Kolbenboden (1) mit tiefer, bis hinter die oberste Ringnut erstreckter Brennraummulde (2) sowie die mehrere Ringnuten aufweisende Ringnutenpartie (4) bildenden Kolbenkopf und einem Kolbenschaft (5, 15) mit integrierten Bolzennaben (6, 16) mit Block- (7) oder Trapezabstützung besteht und auf der Druck- und Gegendruckseite ungeschlitzt vom Kopf zum Schaft durchgehend ausgebildet ist, **dadurch gekennzeichnet, dass** in den Bereichen zwischen der Ringnut (9) für den untersten Verdichtungsring und dem oberen Scheitel der Bohrungen (10, 19) in den Bolzennaben ein vom Mantel des Kolbenschafts nach innen verlaufendes, sich beidseitig der die Kolbenachse und die Bolzenachsrichtung einschließenden Ebene erstreckendes Sackloch (11, 20) mit schlitzförmigem und langlochförmigem Querschnitt ausgebildet ist, dessen größte Abmessung parallel zu der die Bolzenachsrichtung einschließenden Horizontalebene verläuft.

2. Leichtmetalldieselkolben nach Anspruch 1, **dadurch gekennzeichnet, daß** die größte Abmessung des Querschnitts des schlitzförmigen Sacklochs (11, 20) eine Länge von 30 bis 150%, vorzugsweise 50 bis 120%, des Durchmessers der Bohrungen (10, 19) in den Bolzennaben (6, 16) aufweist und die kleinste Abmessung des Querschnitts des schlitzförmigen Sacklochs größer als und bis zu 3 mal so groß wie die Höhe der untersten Ringnute (9, 18) ist.

3. Leichtmetalldieselkolben nach Anspruch 1 oder 2, **dadurch gekennzeichnet, daß** das schlitzförmige und langlochförmige Sackloch (20) im Querschnitt aus zwei gleichschenkligen, kolbenschaftseitig einen stumpfen Winkel miteinander bildenden Abschnitten (21) besteht.

4. Leichtmetalldieselkolben nach Anspruch 3, **dadurch gekennzeichnet, daß** die Langlochabschnitte (21) jeweils einen Winkel von 5 bis 25° mit der die Bolzenachsrichtung einschließenden Horizontalebene bilden.

5. Leichtmetalldieselkolben nach den Ansprüchen 1 bis 4, **dadurch gekennzeichnet, daß** sich die Sacklöcher (11, 20) vom Mantel des Kolbenschafts bis in den Bereich zwischen Anfang und Ende des mittleren Drittels der Auflagefläche des Kolbenbolzens in den Bohrungen (10, 19) der Bolzennaben (6, 16) erstrecken.

6. Leichtmetalldieselkolben nach den Ansprüchen 1 bis 5, **dadurch gekennzeichnet, daß** die Sacklöcher (11, 20) symmetrisch zu der die Kolbenachse und die Bolzenachsrichtung einschließenden Ebene und senkrecht zu der die Kolbenachse und die Richtung senkrecht zur Bolzenachsrichtung einschließenden Ebene verlaufen.

7. Leichtmetalldieselkolben nach einem oder mehreren der Ansprüche 1 bis 6, **dadurch gekennzeichnet, daß** die Sacklöcher (11, 20) in den dem oberen Scheitel der Bohrungen (10, 19) in den Bolzennaben (6, 16) zugewandten Bereichen über einen Durchbruch (22) mit den Bohrungen in den Bolzennaben verbunden sind.

## Claims

1. A light metal diesel piston for internal combustion engines, which consists of a piston head forming the piston crown (1) with a deep combustion chamber recess (2) extended to behind the uppermost ring groove and also the ring groove portion (4) comprising a plurality of ring grooves, and a piston skirt (5, 15) with integrated gudgeon pin bosses (6, 16) with block support (7) or trapezoidal support, and is formed to be continuous on the pressure and counterpressure sides without slots from the head to the skirt, **characterised in that** a blind hole (11, 20) with a slot-shaped cross-section in the form of an elongate hole running inwards from the outside peripheral surface of the piston skirt and extending on both sides of the plane containing the piston axis and the axial direction of the pin is provided in the regions between the ring groove (9) for the lowermost compression ring and the upper apex of the bores (10, 19) in the gudgeon pin bosses, the maximum dimension of which hole extends parallel to the horizontal plane containing the axial direction of the pin.

2. A light metal diesel piston according to Claim 1, **characterised in that** the maximum dimension of the cross-section of the slot-shaped blind hole (11, 20) has a length of 30 to 150%, preferably 50 to 120%, of the diameter of the bores (10, 19) in the gudgeon pin bosses (6, 16) and the minimum dimension of the cross-section of the slot-shaped blind hole is greater than and up to 3 times as large as the height of the lowermost ring grooves (9, 18).

3. A light metal diesel piston according to Claim 1 or 2, **characterised in that** the slot-shaped elongate blind hole (20) in cross-section consists of two sections (21) having identical arms which form an obtuse angle with each other on the piston skirt side.

4. A light metal diesel piston according to Claim 3, **characterised in that** the elongate hole sections (21) each form an angle of 5 to 25° with the horizontal plane containing the axial direction of the pin.

5. A light metal diesel piston according to Claims 1 to 4, **characterised in that** the blind holes (11, 20) extend from the outside peripheral surface of the piston skirt into the region between the beginning and end of the middle third of the length over which the gudgeon pin is supported in the bores (10, 19) of the gudgeon pin bosses (6, 16).

6. A light metal diesel piston according to Claims 1 to 5, **characterised in that** the blind holes (11, 20) run symmetrically to the plane containing the piston axis and the axial direction of the pin and perpendicular to the plane containing the piston axis and the direction perpendicular to the axial direction of the pin.

7. A light metal diesel piston according to one or more of Claims 1 to 6, **characterised in that** the blind holes (11, 20) in the regions lying opposite the upper apex of the bores (10, 19) in the gudgeon pin bosses (6, 16) communicate via an aperture (22) with the bores in the gudgeon pin bosses.

## Revendications

1. Piston en métal léger pour diesel pour des moteurs à combustion interne, qui est constitué d'une tête de piston, formant le fond (1) de piston ménageant une chambre (2) de combustion s'étendant profondément jusque derrière la gorge de segment la plus haute ainsi que la partie (4) de gorges de segments comportant plusieurs gorges de segments, et d'une jupe (5,15) de piston à bossages (6,16) d'axe intégrés ayant un nervurage parallélépipédique (7) ou trapézoïdal, et qui est formé sur le côté de pression et de contre-pression sans être fendu de la tête jusqu'à la jupe, **caractérisé en ce qu'**il est formé, dans les régions entre la gorge (9) du segment de compression le plus bas et l'arête supérieure des alésages (10,19) dans les bossages d'axe un trou (11,20) borgne s'étendant vers l'intérieur à partir de la face latérale de la jupe de piston et de part et d'autre du plan passant par l'axe du piston et par la direction de l'axe de bossage, ce trou borgne ayant une section transversale en forme de fente et en forme de trou oblong, section transversale dont la plus grande des dimensions s'étend parallèlement au plan horizontal passant par la direction de l'axe des bossages.

2. Piston en métal léger pour diesel suivant la revendication 1, **caractérisé en ce que** la plus grande dimension de la section transversale du trou (11,20) oblong en forme de fente a une longueur comprise entre 30 et 150 %, de préférence entre 50 et 120% du diamètre des alésages (10,19) dans les bossages (6,16) d'axe et la plus petite dimension de la section transversale du trou borgne en forme de fente est supérieur à la hauteur des gorges de segment (9,18) inférieures, et ce jusqu'à trois fois plus.

3. Piston en métal léger pour diesel suivant la revendication 1 ou 2, **caractérisé en ce que** le trou borgne (20) en forme de fente et en forme de trou oblong est constitué en section transversale de deux parties (21) à ailes égales faisant entre elles un angle obtus du côté de la jupe du piston.

4. Piston en métal léger pour diesel suivant la revendication 3, **caractérisé en ce que** les parties (21) du trou oblong font chacune un angle de 5 à 25° avec le plan horizontal passant par la direction de l'axe des bossages.

5. Piston en métal léger pour diesel suivant l'une des revendications 1 à 4, **caractérisé en ce que** les trous borgnes (11, 20) s'étendent à partir de la face latérale de la jupe de piston jusque dans la région entre le début et la fin du tiers intermédiaire de la face d'appui de l'axe du piston dans les alésages (10,19) des bossages d'axe (6,16).

6. Piston en métal léger pour diesel suivant l'une des revendications 1 à 5, **caractérisé en ce que** les trous borgnes (11, 20) s'étendent symétriquement par rapport au plan passant par l'axe des pistons et par la direction de l'axe des bossages, et perpendiculairement au plan passant par l'axe du piston et par la direction perpendiculaire à la direction de l'axe des bossages.

7. Piston en métal léger pour diesel suivant l'une ou plusieurs des revendications 1 à 6, **caractérisé en ce que** les trous borgnes (11,20) communiquent dans les régions opposées à l'arête supérieure des alésages (10,19) des bossages d'axe (6,16) par l'intermédiaire d'une traversée (22) avec les alésages de bossage d'axe.
